## Europäisches Patentamt

## European Patent Office

## Office européen des brevets

(11) Publication number: **0 013 157**

**B1**

(12) **EUROPEAN PATENT SPECIFICATION**

(45) Date of publication of patent specification: **15.10.86**

(21) Application number: **79303006.5**

(22) Date of filing: **21.12.79**

(51) Int. Cl.⁴: **H 02 K 1/22,** H 02 K 1/28, H 02 K 21/08, H 02 K 15/02

(54) **Permanent magnet rotors, especially for dynamo-electric machines.**

(30) Priority: **26.12.78 US 973343**
**26.12.78 US 973346**

(43) Date of publication of application:
**09.07.80 Bulletin 80/14**

(45) Publication of the grant of the patent:
**15.10.86 Bulletin 86/42**

(84) Designated Contracting States:
**AT BE CH DE FR GB IT LU NL SE**

(56) References cited:
**BE-A- 667 900**
**DE-A-2 062 486**
**DE-A-2 110 308**
**DE-A-2 659 650**
**FR-A-2 386 183**
**GB-A- 859 176**
**GB-A-1 324 147**
**US-A-2 767 368**
**US-A-3 072 813**
**US-A-3 083 311**
**US-A-3 531 670**
**US-A-4 117 360**

(73) Proprietor: **THE GARRETT CORPORATION**
**9851-9951 Sepulveda Boulevard P.O. Box 92248**
**Los Angeles, California 90009 (US)**

(72) Inventor: **Burgmeier, Lyman R.**
**4547 Everest Circle**
**Cypress California (US)**
Inventor: **Mc'Carty, Frederick B.**
**1366 Stonewood Court**
**San Pedro California (US)**
Inventor: **Silver, Alexander**
**4966 Palo Drive**
**Tarzana California (US)**

(74) Representative: **Taylor, Duncan Alistair et al**
**Messrs. Kilburn & Strode 30 John Street**
**London WC1N 2DD (GB)**

Courier Press, Leamington Spa, England.

## Description

This invention relates to permanent magnet rotors, especially for dynamo-electric machines, such as alternators, synchronous a.c. motors, and also for magnetic couplings.

The Prior Art

U.S. Patent No. 3,083,311 discloses an arrangement in which a permanent magnet rotor is used in an alternator. This rotor has a hub of a ferromagnetic material, around which are arranged a plurality of permanent magnets. Each of these magnets is somewhat wedge-shaped, with the narrower end of the wedge pointing radially outwards. The magnets are held in place by being embedded in a ring of aluminium which is cast *in situ* around the magnets and the hub. Thus, between each adjacent pair of magnets, there is a wedge-shaped part of the aluminium ring, and these wedge-shaped parts hold the magnets in place against centrifugal forces by their integral connection to the parts of the aluminium ring which lie axially beyond the ends of the magnets, and which in effect form two aluminium end rings. Although the aluminium is in contact with the material of the hub, there will be little bond strength assisting the end rings in resisting centrifugal force. Such a structure is not suited to particularly high speed operation; in the specific example quoted in this prior U.S. patent, the rotor runs at 3600 r.p.m.

German Patent Application No. 2,659,650 discloses the use of ferrite magnets having a rectangular shape in a rotor structure, which magnets are often brittle and weak in tensile strength. When brittle magnets are used on a rotor, it has been conventional to surround them by a reinforcing hoop, which receives the centrifugal forces exerted on the magnets, so that the magnets are stressed in compression rather than in tension.

In any structure which employs a ring or hoop to resist centrifugal forces, the radial thickness of the ring has to be increased as the design speed of the rotor is increased; as the speed increases, more and more of the strength of the ring is used to withstand the bursting centrifugal forces exerted on the mass of the ring itself, and less and less strength is available to restrain the magnets against centrifugal forces. Also, where the ring or hoop actually surrounds the magnets, there may be some difficulties in distributing the centrifugal forces evenly over the contact area between magnet and hoop. Uneven distribution of these forces both stresses the hoop in bending, and may also result in cracking of the magnets. The use of a radially thick ring surrounding the magnets also results in increased reluctance of the magnetic circuit, and increased flux leakage.

US Specification No. 3,072,813 discloses a structure without a surrounding hoop, but the tangentially polarised permanent magnets are retained in position by overlapping shoulders on radially extending wedge shaped pole pieces between adjacent permanent magnets which pole pieces are secured at their inner end to a hub, made of strong non-magnetic material.

Belgium Specification No. 667900 shows an electromagnetic rotor for a dynamo electric machine with wound poles, the effect of which can be modified by radially polarised permanent magnets which can be axially inserted into wedge shaped slots in the ferromagnetic rotor.

An unwound permanent magnet rotor as known from US—A—3,083,311 and which comprises a hub (12), a plurality of wedge-shaped support members (14) mounted around the periphery of the hub, with their narrower ends adjacent the periphery of the hub, and a plurality of permanent magnets (22) each received in one of the spaces (20) between adjacent support members, each of the spaces (20) between adjacent support members being wedge-shaped with its narrow end radially outwards, and each permanent magnet being wedge-shaped to match its space is according to one aspect of the present invention characterised in that the radial extent of the magnets is less than that of the spaces; each of the wedge-shaped support members (14) is restrained against centrifugal forces by being attached by its narrower end to the hub (12); each of the spaces between adjacent support members (14) is open at at least one of its axially-facing limits, to allow insertion of the respective permanent magnet (22) in an axial direction; and that there is a cushioning member (30) between each permanent magnet (22) and each adjacent supporting member (14) for distributing centrifugal crushing forces over the magnets, the cushioning member having a smooth face (32) and an opposed face having features (34) which reduce the area of the cushioning member which contacts an adjacent member.

The cushioning members would be designed to distribute evenly over each magnet the compressive forces resulting from the wedging action of the magnet trying to move radially outwards. They reduce the likelihood of fracture of the relatively brittle material of the magnets.

DE—A—2110308 discloses the use of an elastic layer such, as rubber between the permanent magnets of rectangular shape and the pole pieces in a permanent magnet rotor to prevent the magnets from inadvertantly moving within the spaces provided for them. However, as these spaces are also of rectangular shape no wedging action can take place.

In a preferred embodiment, the angle of taper of the permanent magnets and of the spaces within which the magnets are received is sufficiently small that the magnets are wedged in place by centrifugal forces, but not so small that the magnets are crushed by the wedging action produced by centrifugal forces. This angle of taper may be between 4 and 18 degrees, preferably between 12 and 16 degrees.

According to a second aspect of the invention, a rotor according to the first aspect is manufactured by a method which involves inserting the permanent magnets in an axial direction into the respective spaces between the support members, rotating the rotor at its maximum speed to wedge the magnets in place, and then machining the exterior surface of the rotor.

The accompanying drawings illustrate various permanent magnet rotors, some of which embody the invention.

Brief Description of the Drawings

Figure 1 is a cross-section through part of a first design of permanent magnet rotor;

Figures 2, 3 and 4 are views, similar to Figure 1, showing three further designs of rotor of which that of Figure 4 embodies the invention;

Figure 5 is an elevation of one of a number of cushions incorporated in the rotor of Figure 4;

Figure 6 is a section through the cushion, taken on the line VI—VI of Figure 5; and

Figure 7 is a section, similar to Figure 6, through a second form of cushion which can be used in the rotor of Figure 4.

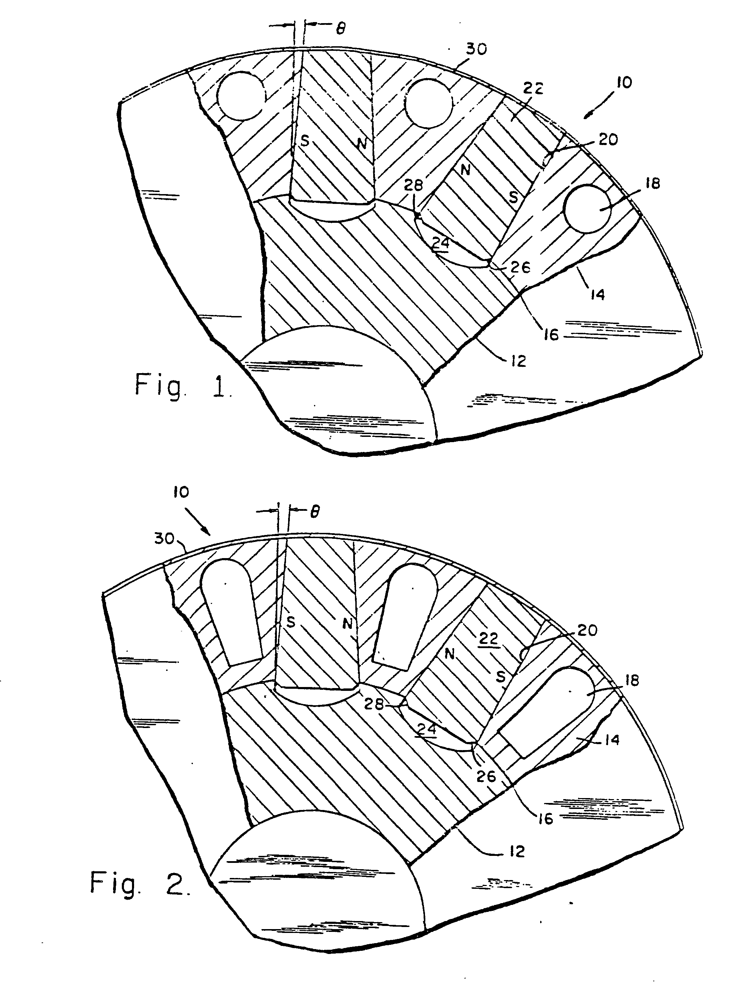

Referring now to Figure 1, the first design of permanent magnet rotor for a dynamo-electric machine is shown at 10, and includes a cylindrical hub 12, around which are affixed twelve magnet support members 14 (three only shown in Figure 1). The hub 12 is made of a non-magnetic material, while the magnet support members 14 are made of a ferromagnetic material. The joint between the hub 12 and one of the magnet support members 14 is shown at 16; a variety of methods can be used to join the hub 12 and the support members 14, for example; furnace brazing the two materials together; using a cast bonding technique; diffusion bonding; or bonding by the hot isostatic pressure (HIP) process.

Each of the magnet support members 14 is wedge-shaped in section, as can be seen from Figure 1, with the narrower end of the wedge attached to the hub 12. The angle of taper of each support member 14 is such that the spaces 20 between adjacent support members are also wedge-shaped, as seen in section in Figure 1, but with the narrower end of the wedge radially outermost. A plurality of correspondingly wedge-shaped permanent magnets 22 are received in each of the spaces 20. The radially innermost surface of each magnet 22 in this example has slightly rounded corners 26 and 28, to ease insertion of the magnets 22 into the spaces 20. The dimension of each magnet 22 in the radial direction is less than the radial depth of the spaces 20, so that a gap 24 is left between the radially innermost surfaces of the magnets and the adjacent surface of the space 20. This gap 24 does not constitute an interruption in the magnetic circuit of the machine, because the magnets 22 are magnetised in the circumferential direction, so that the magnetic flux passes directly from the magnets to the magnet support members 14, which act as pole pieces. As Figure 1 shows, alternate magnets 22 around the rotor 10 are magnetised in opposite directions.

A thin hoop 30 which is heat shrunk upon the peripheral surface of the rotor 10 functions as an electric damper to intercept and diminish the flux variations caused by the fact that the stator surface of the dynamo-electric machine is not smooth, but has teeth which cause a ripple in the flux, tending to produce eddy currents in the rotor 10. The hoop 30 helps to prevent these flux variations from penetrating into the support members 14 and into the magnets 22, by virtue of the fact that opposing eddy currents are produced in the hoop 30, thereby shielding the permanent magnets 22 and the support members 14. The hoop 30 consists of a high strength, non-magnetic material preferably having a low resistivity, such as a beryllium copper alloy.

The process of assembling the rotor 10 involves first sliding the magnets into the space 20, and then rotating the rotor 10 at its maximum allowable speed. At this stage, the hoop 30 has not yet been fitted. During rotation the magnets 22 move radially outwards owing to centrifugal force. The angle of taper of the wedge-shaped spaces 20 is so chosen that the magnets 22 are consequently wedged in place in the spaces 20, even after the rotor 10 has ceased rotating. The outer surfaces of the support members 14 and the magnets 22 are then ground to the proper dimensions and the hoop 30 is shrunk onto the rotor periphery, thus completing the assembly.

The angle of taper of the spaces 20 is critical. Half this angle, that is to say, the angle formed between the wall of the spaces 20 and a plane passing through the axis of the rotor 10 and through the centre of the magnet 22 should be slightly less than the angle of friction. This angle is experimentally determined and is the maximum angle at which a locking wedge action is achieved for the material and conditions pertinent to a given design. If the angle of taper is too large the magnets 22 will not remain locked in place after the rotor ceases to rotate and if the angle is too small, lateral crushing forces may cause the magnet to fracture. Therefore, there is a critical range within which the locking angle $\theta$ must lie. It has been found that the size of the locking angle $\theta$ should usually be between 2 to 9 degrees, preferably 6 to 8 degrees.

Although the wedging action of the magnets 22 within the spaces 20 is primarily responsible for resisting the centrifugal forces of the magnets 22, the hoop 30 also provides a small restraining force on the magnets.

The support members 14 each have through holes 18 disposed near the periphery of the rotor 10, for reducing the mass of the support members 14, so that the rotor 10 can operate at high speed. The holes 18 are circular in the rotor of Figure 1; in general, this is the easiest shape of hole to produce. As well as lightening the support members 14, the holes 18 allow a flow of cooling air through the rotor, which helps to dissipate any heating resulting from eddy currents. Similarly, cooling air can flow through the gaps 24 at the innermost ends of the magnets 22.

A further function of the gap 24 is to provide a stress relieving radius at the root of the support members 14.

The rotor shown in Figure 2 is generally similar to that shown in Figure 1, and the same reference numbers will be used for corresponding parts. The primary difference between the two rotors is that, in the rotor of Figure 2, the lightening and cooling holes 18 are not circular in section, but are elongated in the radial direction. Holes of this shape are somewhat more difficult to produce, but result in lighter weight, and a higher permissible speed for the rotor 10.

The centrifugal acceleration to which the parts of the rotor are subjected is proportional to the distance from the rotor axis, so that the most benefit, in terms of reducing the stress on critical sections (such as the joint 16) is obtained by removing mass from the support members 14 at as great a radius as possible.

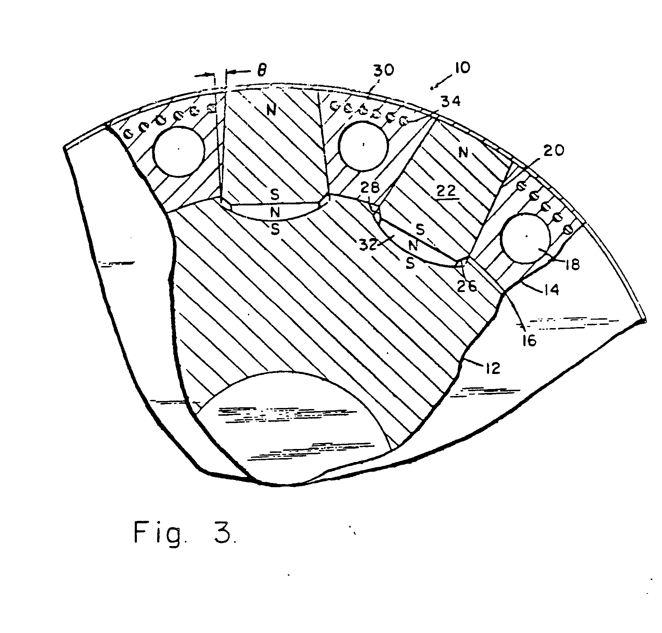

Figure 3 shows a further rotor; again, the same reference numbers will be used for corresponding parts. The magnets 22 in Figure 3 are radially magnetised, while the hub 12 consists of a ferromagnetic material and the support members 14 consist of a non-magnetic material. In such an arrangement, each gap 24 would form an interruption in the magnetic circuit, and therefore the gaps 24 are each filled with a closure shim 32 of a ferromagnetic or a permanent magnet material to reduce substantially the reluctance which the gap 24 would otherwise create. The shims 31 are inserted into the gaps 24 after the magnets 22 have been locked in place as described above.

The rotor 10 of Figure 3 also has dampening bars 34 which are located near the rotor's periphery and extend through the support members 14; the ends of the bars 34 are interconnected by end rings (not shown). When used with the dampening hoop 30 the bars 34 provide added electrical dampening. Alternatively, the bars 34 can be used without the hoop 30 to intercept and diminish the flux harmonics caused by the stator.

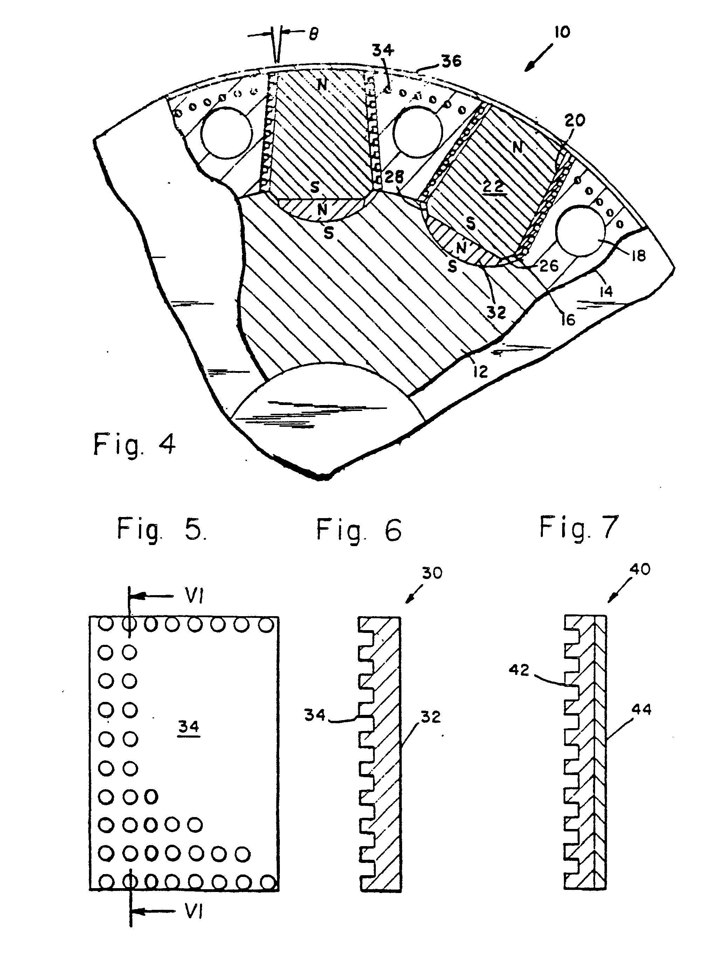

The rotor 10 shown in Figure 4 is generally similar to that shown in Figure 3, but includes, in accordance with the invention, on each side of each magnet 22, between the magnet 22 and the adjacent magnet support member 14, a ferromagnetic cushioning member 30. The purpose of the cushioning members 30 is to help to distribute tangential crushing forces evenly over the magnets 22, and thereby help to prevent fracture of the magnets 22, which may often be of a relatively brittle material.

Figures 4 and 5 show one of the cushioning members 30 in greater detail. The member 30 has a smooth side 32 and an embossed or patterned side 34, which in this example bears an array of short cylindrical protrusions. The embossed side 34 of the cushion 30 is preferably in contact with the support member 14. The smooth side 32 of the cushion 30 preferably fits flush against the magnet 22 so that no gap in the flux path exists between the cushion 30 and the magnet 22. The purpose of the embossed side 34 of the cushion 30 is to provide room for the material of the cushion 30 to yield or flow locally and thus avoid any excessive localized stresses or pressure between the support member 14 and the permanent magnet 22, which could otherwise exist, owing to manufacturing tolerances or to deformations of the support members 14 and/or deformations of the magnets 22 with changing temperature or speed. The embossed side 34 also allows the cushion 30 to conform to the shape of the space between the support member 14 and the magnet 22. The embossed pattern is designed to provide a low bulk modulus and to provide spaces so that the material can flow locally where stresses are high because of manufacturing inaccuracies or distortion caused by the high operating speeds.

The embossed pattern permits greater freedom in selecting the optimum cushion material for transmission of magnetic flux without saturation. The mechanical properties can be achieved by adjusting the hole pattern area to achieve an effective yield stress that exceeds the average stress required to support the magnet loads at speed but is below the yield stress of the magnet material.

One possible material for the cushioning member 30 is a nickel alloy. Non-magnetic materials such as aluminium, or glass fibres in an epoxy resin matrix, can be used for the cushion where low yield strength and large material flow is required.

Of course, cushioning members can also be incorporated in rotors of the types shown in Figures 1 and 2.

In another embodiment, as shown in Figure 7, a multiple layer cushion 40 is used to protect the relatively fragile magnets 22 from fracturing at high speeds. A first layer 42 of the cushion 40 has an embossed surface and a smooth surface, while a second layer 44 has two smooth surfaces. The embossed surface of the layer 42 would be placed adjacent to the support members 14.

The cushions 30 or 40 can be used with any of the rotors of Figures 1, 2 and 3.

### Claims

1. An unwound permanent magnet rotor which comprises a hub (12), a plurality of wedge-shaped support members (14) mounted around the periphery of the hub, with their narrower ends adjacent the periphery of the hub, and a plurality of permanent magnets (22) each received in one of the spaces (20) between adjacent support members, each of the spaces (20) between adjacent support members being wedge-shaped with its narrow end radially outwards, and each permanent magnet being wedge-shaped to match its space; characterised in that the radial extent of the magnets is less than that of the spaces; each of the wedge-shaped support members (14) is restrained against centrifugal forces by being attached by its narrower end to the hub (12); each of the spaces between adjacent support members (14) is open at at least one of its axially-facing limits, to allow insertion of the respective permanent magnet (22) in an axial direction, and that there is a cushioning member (30) between each permanent magnet (22) and each adjacent supporting member (14) for distributing centrifugal crushing forces over the magnets, the cushioning member having a smooth face (32) and an opposed face having features (34) which reduce the area of the cushioning member which contracts an adjacent member.

2. A rotor as claimed in Claim 1 in which the support members are of ferro-magnet material and the hub is of non-magnetic material.

3. A rotor as claimed in Claim 1 or Claim 2 in which each of the support members (14) has a lightening hole (18) with a cross section which is elongated in the radial direction.

4. A rotor as claimed in any preceding claim in which the permanent magnets are tangentially magnetised.

5. A rotor as claimed in any of the preceding claims, which has, around the support members (14) and the magnets (22), a hoop (36) of a strong material with high electrical conductivity.

6. A rotor as claimed in any of the preceding claims, in which the angle of taper of the permanent magnets (22) and of the spaces within which the magnets are received is sufficiently small that the magnets are wedged in place by centrifugal forces, but not so small that the magnets are crushed by the wedging action produced by centrifugal forces.

7. A rotor as claimed in Claim 6, in which the said angle of taper is between 4 and 18 degrees, preferably between 12 and 16 degrees.

8. A rotor as claimed in any preceding claim in which each cushioning member (30) is made of either nickel alloy, aluminium, or glass fibre in an epoxy resin matrix.

9. A rotor as claimed in any preceding claim, in which each cushioning member (30) is made of a ferromagnetic material having a compressive yield strength less than the compressive yield strength of the material of the permanent magnets (22).

10. A method of manufacturing a rotor as claimed in any of the preceding claims, in which the permanent magnets (22) are inserted in an axial direction into the respective spaces between the support members (14), the rotor is then rotated at its maximum speed to wedge the magnets (22) in place, and the exterior surface of the rotor is then machined.

**Patentansprüche**

1. Permanentmagnetischer Rotor mit einer Nabe (12), einer Vielzahl von keilförmigen Haltebauteilen (14), die um den Umfang der Nabe herum befestigt sind und deren schmalere Enden in der Nähe des Nabenumfanges liegen, und mit einer Vielzahl von Permanentmagneten (22), deren jeder in einem der Zwischenräume (20) zwischen benachbarten Haltebauteilen aufgenommen ist, wobei jeder der Zwischenräume (20) keilförmig mit dem schmalen Ende radial nach außen verlaufend ausgebildet ist, und wobei jeder Permanentmagnet Keilform hat und in diesen Zwischenraum eingepaßt ist, dadurch gekennzeichnet, daß die radiale Erstreckung der Magneten kleiner ist als die der Zwischenräume, daß jedes der keilförmigen Haltebauteile (14) gegen Zentrifugalkräfte dadurch arretiert ist, daß es an seinem schmaleren Ende mit der Nabe (12) verbunden ist, daß jeder der Zwischenräume zwischen benachbarten Haltebauteilen (14) an mindestens einer der axial gerichteten Grenzflächen geöffnet ist, damit der entsprechende Permanentmagnet (22) in axialer Richtung eingesetzt werden kann, und daß ein Dämpfungsbauteil (30) zwischen jedem Permanentmagnet (22) und jedem benachbarten Haltebauteil (14) zur Verteilung von Zentrifugaldruckkräften über die Magneten vorgesehen ist, wobei das Dämpfungsbauteil eine glatte Fläche (32) und eine gegenüberliegende Fläche mit Ausbildungen (34) aufweist, die den Flächeninhalt des Dämpfungsbauteiles, das ein benachbartes Bauteil kontrahiert, reduzieren.

2. Rotor nach Anspruch 1, dadurch gekennzeichnet, daß die Haltebauteile aus ferromagnetischem Material und die Nabe aus nichtmagnetischem Material bestehen.

3. Rotor nach Anspruch 1 oder 2, bei dem jedes Haltebauteil (14) ein Erleichterungsloch (18) mit einem in radialer Richtung länglichen Querschnitt besitzt.

4. Rotor nach einem der vorausgehenden Ansprüche, bei dem die Permanentmagneten in tangentialer Richtung magnetisiert sind.

5. Rotor nach einem der vorausgehenden Ansprüche, der um die Haltebauteile (14) und die Magneten (22) herum ein Band bzw. einen Reifen (36) aus festem Material mit hoher elektrischer Leitfähigkeit besitzt.

6. Rotor nach einem der vorausgehenden Ansprüche, bei dem der Neigungswinkel der Permanentmagneten (22) und der Zwischenräume, in deren die Magneten aufgenommen sind, ausreichend klein ist, damit die Magneten an Ort und Stelle durch Zentrifugalkräfte verkeilt werden, jedoch nicht so klein ist, daß die Magneten durch die von den Zentrifugalkräften hervorgerufene Keilwirkung brechen.

7. Rotor nach Anspruch 6, dadurch gekennzeichnet, daß der Neigungswinkel zwischen 4 und 18°, vorzugsweise zwischen 12 und 16° beträgt.

8. Rotor nach einem der vorausgehenden Ansprüche, bei dem jedes Dämpfungsbauteil (30) entweder aus Nickellegierung, Aluminium oder Glasfaser in einer Epoxydharzmatrix besteht.

9. Rotor nach einem der vorausgehenden Ansprüche, bei dem jedes Dämpfungsbauteil (30) aus einem ferromagnetischen Material mit einer Druckfestigkeit besteht, die kleiner ist als die Druckfestigkeit des Materials der Permanentmagneten (22).

10. Verfahren zum Herstellen eines Rotors nach einem der vorausgehenden Ansprüche, bei dem die Permanentmagneten (22) in axialer Richtung in die entsprechenden Zwischenräume zwischen den Haltebauteilen (14) eingesetzt werden, der Rotor anschließend zum Verkeilen der Magneten (22) an Ort und Stelle mit maximaler Drehzahl rotiert wird, un dann die äußere Oberfläche des Rotors bearbeitet wird.

**Revendications**

1. Rotor à aimant permanent non bobiné qui comprend un moyeu (12), plusieurs organes de support cunéiformes (14) montés autour de la péripérie du moyeu et dont les extrémités étroites sont adjacentes à la périphérie du moyeu, et plusieurs aimants permanents (22) logés chacun dans un des espaces (20) prévus entre des organes de support adjacents, chacun des espaces (20), entre des organes de support adjacents, étant cunéiforme et son extrémité étroite étant orientée radialement vers l'extérieur, et chaque aimant permanent étant cunéiforme de manière à s'ajuster dans son espace, caractérisé en ce que la dimension radiale des aimants est inférieure à celle des espaces, chaque organe de support cunéiforme (14) est retenu pour résister à la sollicitation des forces centrifuges en étant attaché par son extrémité étroite au moyeu (12), chacun des espaces entre des organes de support adjacents (14) est ouvert au moins à une de ses limites axiales pour permettre l'insertion de l'aimant permanent (22) correspondant dans un sens axial, et un élément d'amortissement (30) est intercalé entre chaque aimant permanent (22) et chaque organe de support adjacent (14) pour répartir des forces d'écrasement centrifuges sur les aimants, l'élément d'amortissement comportant une face lisse (32) et une face opposée présentant des particularités (34) qui réduisent la surface de l'élément d'amortissement qui est en contact avec un organe adjacent.

2. Rotor suivant la revendication 1, dans lequel les organes de support sont en matière ferromagnétique et le moyeu est en matière non magnétique.

3. Rotor suivant la revendication 1 ou 2, dans lequel chacun des organes de support (14) présente une forure d'allègement (18) dont la section transversale est allongée dans le sens radial.

4. Rotor suivant l'une quelconque des revendications précédentes, dans lequel les aimants permanents sont magnétisés tangentiellement.

5. Rotor suivant l'une quelconque des revendications précédentes, qui comporte, autour des organes de support (14) et des aimants (22), une frette (36) en une matière robuste à haute conductivité électrique.

6. Rotor suivant l'une quelconque des revendications précédentes, dans lequel l'angle d'inclinaison des faces de l'aimant permanent (22) et des espaces dans lesquels les aimants sont reçus est suffisamment petit pour que les aimants soient coincés en place par les forces centrifuges, mais pas au point que les aimants soient écrasés par l'effet de coincement produit par les forces centrifuges.

7. Rotor suivant la revendication 6, dans lequel l'angle d'inclinaison des faces est compris entre 4 et 18°, de préférence entre 12 et 16°.

8. Rotor suivant l'une quelconque des revendications précédentes, dans lequel chaque élément d'amortissement (30) est fait d'un alliage de nickel, d'aluminium ou de fibres de verre dans une masse de résine époxyde.

9. Rotor suivant l'une quelconque des revendications précédentes, dans lequel chaque élément d'amortissement (30) est fait d'une matière ferromagnétique ayant une limite élastique à la compression inférieure à la limite élastique à la compression de la matière des aimants permanents (22).

10. Procéde pour fabriquer un rotor suivant l'une quelconque des revendications précédentes, dans lequel on insère les aimants permanents (22) dans un sens axial dans les espaces correspondants entre les organes de support (14), on fait ensuite tourner le rotor à sa vitesse maximum pour coincer les aimants (22) en place et on usine ensuite la surface extérieure du rotor.

Fig. 1.

Fig. 2.

Fig. 3.

Fig. 4

Fig. 5.    Fig. 6    Fig. 7